# EUROPÄISCHE PATENTANMELDUNG

(11) **EP 1 193 159 A1**
(43) Veröffentlichungstag der Anmeldung: **03.04.2002**
(21) Anmeldenummer: 00121088.9
(22) Anmeldetag: 28.09.2000
(51) Int. Cl.: B62D 7/16, F16C 11/06, F16J 3/04

(54) **Dichteinrichtung zur Abdichtung des Übergangsbereiches relativ zueinander beweglicher Bauteile**

(71) Anmelder: ContiTech Vibration Control GmbH, 30165 Hannover (DE)
(72) Erfinder: Bederna, Christoph, Dr., 31515 Steinhude (DE); Klar, Rudolf, 37154 Northeim (DE); Armbrecht, Karl, 37520 Osterode (DE)
(74) Vertreter: Schneider, Egon

(57) **Zusammenfassung**

Dichteinrichtung zur Abdichtung des Übergangsbereiches vzw. relativ zueinander beweglicher Bauteile, insbesondere Lenkungsbalg einer Fahrzeuglenkung, mit einem ersten und einem zweiten Befestigungsbund, zwischen denen sich ein die zu schützenden Bauteile umschließender Mantelbereich erstreckt, der bei Relativbewegung der Bauteile zueinander Kräfte auf den ersten und/oder zweiten Befestigungsbund überträgt,
**dadurch gekennzeichnet, dass**
mindestens ein Befestigungsbund (3) eine radiale Abstützungsfläche (5) aufweist, zu der beabstandet und weitgehend entkoppelt ein elastisch auslenkbares Dichtelement (7) vorgesehen ist, dessen Elastizität und Auslenkbarkeit derart gewählt sind, dass bei Krafteinwirkung auf den Befestigungsbund (3) die Anlage des Dichtelementes (7) an der Dichtfläche (6) des betreffenden Bauteils und damit die Dichtfunktion erhalten bleibt.

## Beschreibung

Die Erfindung betrifft eine Dichteinrichtung zur Abdichtung des Übergangsbereiches vorzugsweise relativ zueinander beweglicher Bauteile, insbesondere einen Lenkungsbalg einer Fahrzeuglenkung, mit einem ersten und einem zweiten Befestigungsbund und einem zwischen diesen angeordneten Mantelbereich gemäß Oberbegriff des Anspruchs 1.

Dichteinrichtungen, die das Eindringen von Feststoffen und Flüssigkeiten in einen abzudichtenden Bereich zueinander beweglicher Bauteile verhindern sollen, sind hinreichend bekannt. In der Praxis ergeben sich jedoch immer wieder Schwierigkeiten, über einen längeren Zeitraum die geforderte Dichtwirkung zu erbringen. Besondere Probleme entstehen immer dann, wenn ein Befestigungsbund eines Schutzbalges während seines Einsatzes Krafteinwirkungen unterliegt, die zu Formänderungen des Befestigungsbundes führen.

In der Patentschrift SU 1819334 A3 wird eine Dichtmanschette an einem Lenkgestänge eines Transportmittels beschrieben, die in einem Lagerring geführt ist und an diesem sowie einem angrenzenden Bauteil dichtend anliegt. Dabei ist die erreichbare Dichtwirkung von der radialen Vorspannung der Dichtmanschette im abzudichtenden Bereich und vom Ermüdungsverhalten der Dichtmanschette abhängig.

Der Erfindung liegt die Aufgabe zugrunde, eine Dichteinrichtung zur Abdichtung des Übergangsbereiches von Bauteilen derart weiterzuentwickeln, dass mit einfachen Mitteln eine sichere Abdichtung der zu schützenden Bauteile erreicht wird.

Erfindungsgemäß weist hierfür mindestens ein Befestigungsbund eine radiale Abstützungsfläche auf, zu der beabstandet und weitgehend entkoppelt ein elastisch auslenkbares Dichtelement vorgesehen ist, dessen Elastizität und Auslenkbarkeit derart gewählt sind, dass bei Krafteinwirkung auf den Befestigungsbund, die infolge der Relativbewegung der abzudichtenden Bauteile zueinander entstehen kann, die Anlage des Dichtelementes an der radialen Dichtfläche des betreffenden Bauteils und damit die Dichtfunktion erhalten bleibt.

Die Erfindung ist mit dem Vorteil verbunden, dass eine sichere Abdichtung gegen das Eindringen von Fremdstoffen und Flüssigkeiten in den geschützten Bereich besteht, da unabhängig von der tatsächlichen Position der radialen Abstützungsfläche des Befestigungsbundes das elastische Dichtelement ständig auf der Grundlage seiner Auslenkbarkeit an der abzudichtenden Fläche anliegt, so dass Kräfte, die auf den Befestigungsbund einwirken, den über die Dichtfläche des Dichtelementes vermittelten Kontakt zum abzudichtenden Bauteil nicht unterbrechen.

In zweckmäßiger Ausführung der Erfindung handelt es sich bei dem Dichtelement um eine geneigt zur radialen Dichtfläche angeordnete Dichtlippe. Bei Deformation und/oder Lageänderung des Befestigungsbundes bzw. dessen radialer Abstützungsfläche wird die jeweilige Veränderung durch selbsttätige Einstellung einer geeigneten Neigung der Dichtlippe zur Erhaltung der Dichtwirkung kompensiert.

Die radiale Abstützungsfläche des Befestigungsbundes und/oder das Dichtelement können an einem Kunststoff-Zwischenring anliegen, so dass Korrosionsprobleme, wie sie bei einer Abdichtung auf Metallteilen entstehen, ausgeschlossen sind. Als besonders geeignet hat sich ein Kunststoff-Zwischenring aus Polyamid erwiesen.

In weiterer Ausgestaltung der Erfindung sitzt auf dem Außenumfang des Befestigungsbundes ein Sicherungsring, der bevorzugt geschlitzt und elastisch aufweitbar ausgeführt ist. Durch Austausch des Sicherungsringes und gegebenenfalls Neupositionierung desselben kann veränderten Betriebsbedingungen - insbesondere im Hinblick auf die statische und dynamische Belastung des Befestigungsbundes - entsprochen werden.

Alternativ hierzu besteht auch die Möglichkeit, den Sicherungsring in den Befestigungsbund einzubetten. Hierbei kann gezielt auf die Ausbildung der radialen Abstützungsfläche Einfluss genommen werden.

Weiterhin kann der Sicherungsring derart dimensioniert und angeordnet sein, dass eine radiale Aufweitung des Befestigungsbundes bei Krafteinwirkung auf diesen verhindert wird, so dass an die Auslenkbarkeit und Elastizität des Dichtelementes nur geringe Forderungen zu stellen sind.

Auch liegt es im Rahmen der Erfindung am Befestigungsbund vzw. axial wirkende Dichtbereiche vorzusehen, die die radiale Abstützungsfläche und das Dichtelement zumindest über einen längeren Zeitraum von Fremdsubstanzen und Flüssigkeiten freihalten.

Die Erfindung soll nachfolgend anhand eines Ausführungsbeispiels näher erläutert werden. Es zeigen
- Fig. 1: einen im Endbereich konischen, mit einer Spurstange einer Lenkung verbundenen Bolzen, der durch einen Befestigungsbund mit Sicherungsring abgedichtet ist,
- Fig. 2: eine Darstellung gemäß Fig. 1 mit auf dem konischen Teil des Bolzens befindlichem Kunststoff-Zwischenring,
- Fig. 3: eine Darstellung gemäß Fig. 2, jedoch mit einem speziell ausgebildeten Kunststoff-Zwischenring zur axialen Sicherung des Befestigungsbundes und
- Fig. 4: eine Darstellung gemäß Fig. 3 mit einem Sicherungsring, der in den Befestigungsbund eingebettet ist.

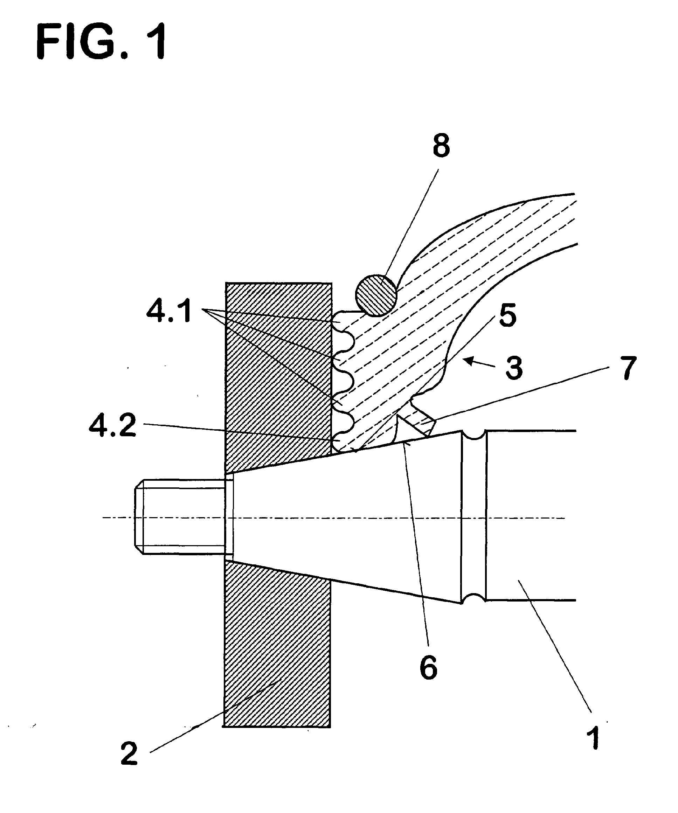

Zur Abdichtung eines hier nicht dargestellten Kugelgelenkes einer Kraftfahrzeuglenkung ist gemäß Fig. 1 in dem Verbindungsbereich des Kugelgelenk-Bolzens 1 mit der Spurstange 2 ein Befestigungsbund 3 eines Lenkungsbalges vorgesehen. Der Befestigungsbund 3 weist eine Anzahl von Vordichtungen 4.1 auf, die an der Spurstange 2 anliegen. Weiterhin umfasst der Befestigungsbund 3 eine Zwischendichtung 4.2, die, wie die Vordichtungen 4.1, an der Spurstange 2 anliegt, jedoch direkt in eine radiale Abstützungsfläche 5 übergeht, die sich auf einer Dichtfläche 6 des Kugelgelenk-Bolzens 1 abstützt. Zur radialen Abstützungsfläche 5 beabstandet und von dieser entkoppelt ist am Befestigungsbund 3 eine elastisch auslenkbares Dichtelement in Form einer neigungsveränderbaren Dichtlippe 7 vorgesehen. Die radiale wie auch die axiale Lagefixierung des Befestigungsbundes 3 wird von einem Sicherungsring 8 übernommen.

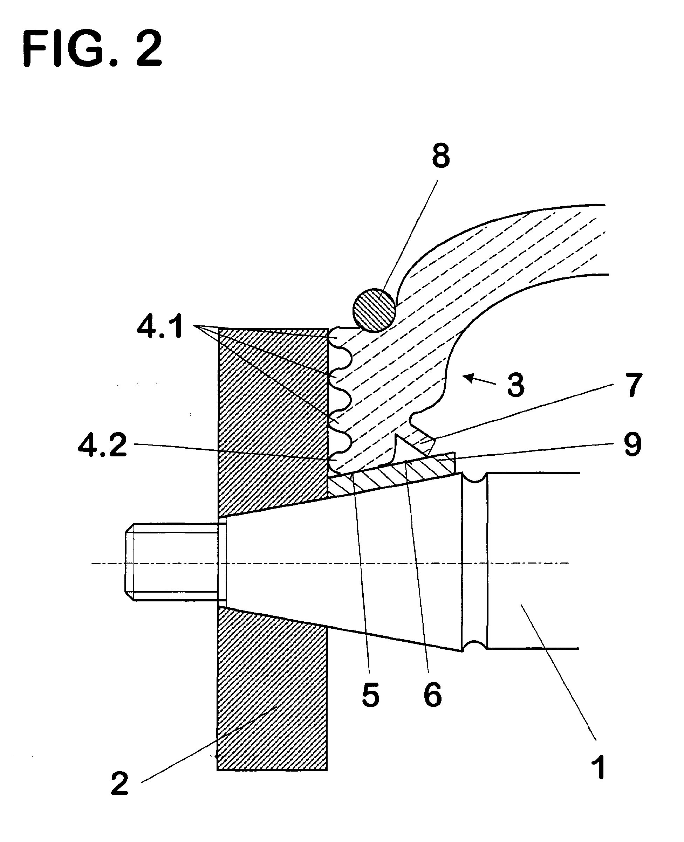

Wie aus Fig. 2 ersichtlich, befindet sich auf dem konischen Endstück des Kugelgelenk-Bolzens 1 ein kegelstumpfförmiger Zwischenring 9 aus Polyamid, auf dem die radiale Abstützungsfläche 5 und die Dichtlippe 7 aufliegen. Da hiermit eine vollständige Trennung dieser Dichtbereiche von metallischen Teilen erfolgt, ist eine die Dichtwirkung mindernde Korrosion ausgeschlossen.

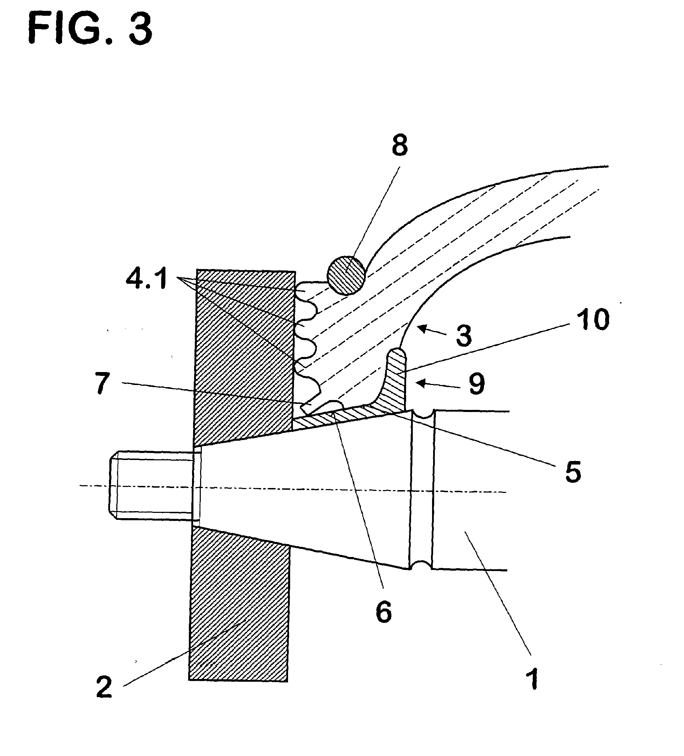

Weiterhin kann es zweckmäßig sein, den Zwischenring 9 mit einer umlaufenden Schulter 10 zu versehen, wodurch eine exakte axiale Positionierung des Befestigungsbundes 3 möglich wird (Fig. 3).

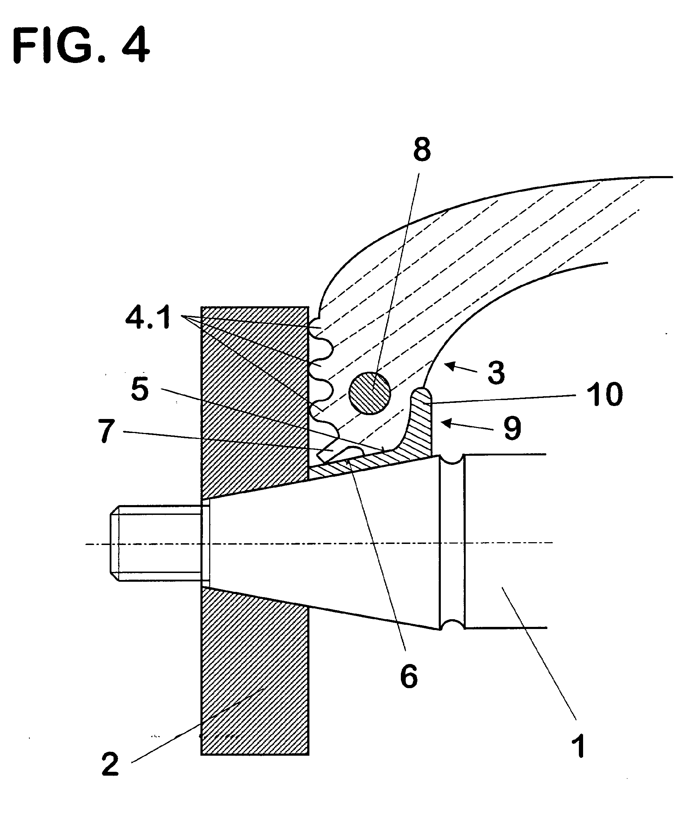

Zur Schaffung von definierten Krafteinleitungsverhältnissen in den Befestigungsbund 3 ist in der Ausführungsform gemäß Fig. 4 der Sicherungsring 8 in den Befestigungsbund 3 eingebettet.

## Patentansprüche

1. Dichteinrichtung zur Abdichtung des Übergangsbereiches vzw. relativ zueinander beweglicher Bauteile, insbesondere Lenkungsbalg einer Fahrzeuglenkung, mit einem ersten und einem zweiten Befestigungsbund, zwischen denen sich ein die zu schützenden Bauteile umschließender Mantelbereich erstreckt, der bei Relativbewegung der Bauteile zueinander Kräfte auf den ersten und/oder zweiten Befestigungsbund überträgt,
**dadurch gekennzeichnet, dass**
mindestens ein Befestigungsbund (3) eine radiale Abstützungsfläche (5) aufweist, zu der beabstandet und weitgehend entkoppelt ein elastisch auslenkbares Dichtelement (7) vorgesehen ist, dessen Elastizität und Auslenkbarkeit derart gewählt sind, dass bei Krafteinwirkung auf den Befestigungsbund (3) die Anlage des Dichtelementes (7) an der Dichtfläche (6) des betreffenden Bauteils und damit die Dichtfunktion erhalten bleibt.

2. Dichteinrichtung nach Anspruch 1, **dadurch gekennzeichnet, dass** es sich bei dem Dichtelement um eine geneigt zur Dichtfläche (6) angeordnete Dichtlippe (7) handelt.

3. Dichteinrichtung nach Anspruch 1 oder 2, **dadurch gekennzeichnet, dass** die radiale Abstützungsfläche (5) des Befestigungsbundes (3) und/oder das Dichtelement (7) an einem Kunststoff-Zwischenring (9) anliegen.

4. Dichteinrichtung nach Anspruch 3, **dadurch gekennzeichnet, dass** ein Kunststoff-Zwischenring (9) aus Polyamid zum Einsatz kommt.

5. Dichteinrichtung nach Anspruch 1, **dadurch gekennzeichnet, dass** auf dem Außenumfang des Befestigungsbundes (3) ein Sicherungsring (8) sitzt.

6. Dichteinrichtung nach Anspruch 5, **dadurch gekennzeichnet, dass** der Sicherungsring (8) geschlitzt und elastisch aufweitbar ausgeführt ist.

7. Dichteinrichtung nach Anspruch 5, **dadurch gekennzeichnet, dass** der Sicherungsring (8) in den Befestigungsbund (3) eingebettet ist.

8. Dichteinrichtung nach Anspruch 5 oder 7, **dadurch gekennzeichnet, dass** der Sicherungsring (8) derart dimensioniert und angeordnet ist, dass eine radiale Aufweitung des Befestigungsbundes (3) bei Krafteinwirkung auf diesen verhindert wird.

9. Dichteinrichtung nach Anspruch 1, **dadurch gekennzeichnet, dass** am Befestigungsbund (3) dem Dichtelement (7) vorgelagerte Dichtbereiche (4.1, 4.2) vorgesehen sind.

10. Dichteinrichtung nach Anspruch 9, **dadurch gekennzeichnet, dass** die dem Dichtelement (7) vorgelagerten Dichtbereiche (4.1, 4.2) bezogen auf die Längserstreckung der Dichteinrichtung axial wirken.
